# EUROPÄISCHE PATENTANMELDUNG

(11) **EP 4 477 514 A1**
(43) Veröffentlichungstag der Anmeldung: **18.12.2024**
(21) Anmeldenummer: 24181828.5
(22) Anmeldetag: 12.06.2024
(51) Int. Cl.: B62K 7/04, B62K 27/00, B62M 6/40, B62J 1/16

(54) **LASTENTRANSPORTEINHEIT, INSBESONDERE FÜR EIN LASTENTRANSPORTRAD, SOWIE LASTENTRANSPORTRAD MIT EINER LASTENTRANSPORTEINHEIT**

(30) Priorität: 13.06.2023 DE 202023103222 U
(71) Anmelder: i:SY GmbH & Co. KG, 50739 Köln (DE)
(72) Erfinder: Van Velthoven, Bastian, 50672 Köln (DE); Schumacher, Jessica, 33619 Bielefeld (DE); Manderla, Gregor, 50733 Köln (DE)
(74) Vertreter: Patentanwälte Buschhoff Hennicke Althaus

(57) **Zusammenfassung**

Die Erfindung betrifft eine Lastentransporteinheit, insbesondere für ein Lastentransportrad, mit einer einen Lastaufnahmeraum 18 umfangsseitig begrenzenden Wandung 19, die im Wesentlichen rechts- und linksseitige Seitenwände 19R, 19L, eine Vorderwand 19V undr eine Rückwand 19R aufweist. Um den Insassen- und Lastentransport zu erleichtern, wird mit der Erfindung vorgeschlagen, dass mindestens eine der Seitenwände 19R, 19L ein im Wesentlichen parallel zu einer Seitenwandlängsrichtung bewegliches Türelement 22 sowie eine von dem Türelement verschließbare und freigebbare Türöffnung 21 umfasst. Durch Verschieben des Türelements zum Freigeben der Türöffnung wird insbesondere der Ein -und Ausstieg von Kindern oder Tieren als Insassen sowie die Be- und Entladung des Lastaufnahmeraums von schwerem Ladegut erleichtert. Die Erfindung betrifft auch ein Lastenfahrrad mit einer entsprechenden Lastentransporteinheit.

## Beschreibung

Die Erfindung betrifft eine Lastentransporteinheit, insbesondere für ein Lastentransportrad oder einen an einem Fahrrad ankuppelbaren Lastentransportanhänger, mit einer einen Lastaufnahmeraum umfangsseitig begrenzenden Wandung, die im Wesentlichen rechts- und linksseitige Seitenwände, eine Vorderwand und/oder eine Rückwand aufweist. Die Erfindung ist außerdem auf ein Lastentransportrad gerichtet, das mit einer Lastentransporteinheit versehen oder versehbar ist.

Zum Transport von mitunter sperrigen und schweren Lasten, aber auch von Kindern und Haustieren kommen im Verkehr zunehmend häufig Lastentransporträder oder an einem Fahrrad ankuppelbare Lastentransportanhänger zum Einsatz, die mit einer Lastentransporteinheit versehen sind oder versehen werden können, die einen geeigneten Lastaufnahmeraum aufweisen. Der Lastaufnahmeraum kann in einem einfachen Fall einfach aus einer Bodenplatte bestehen, an der Verzurrösen angeordnet sind, um ein zu transportierendes Laststück mit Gurten zu sichern. Häufiger ist der Lastaufnahmeraum umfangsseitig von einer Wandung begrenzt, die im Allgemeinen rechts- und linksseitige Seitenwände sowie eine Vorderwand und/oder eine Rückwand umfasst.

Es ist schwierig, ein Kind, einen (insbesondere größeren) Hund oder ein schweres Laststück wie beispielsweise eine Getränkekiste in einen solchen lediglich oben offenen Lastaufnahmeraum zu bringen oder wieder heraus zu holen, denn hierfür ist es erforderlich, das Kind, den Hund oder das Laststück über den oberen Rand der Wandung hinweg zu heben. Die Höhe der Wandung ist bei den bekannten Lastenfahrrädern oder -anhängern, die einen von einer Wandung begrenzten Lastaufnahmeraum aufweisen, im Allgemeinen nicht größer als etwa 40 cm, um es dem Betreiber/der Betreiberin zu ermöglichen, ein Kind, ein Haustier oder eine zu transportierende Last wie z.B. eine schwere Einkaufstasche, eine Getränkekiste o.dgl. in dem Lastaufnahmeraum zu platzieren oder aus diesem wieder herauszuheben. Diese vergleichsweise geringe Höhe begrenzt das Transportvolumen der Lastentransporteinheit. Insbesondere, wenn diese für den Transport von Kindern genutzt wird, hat die eher geringe Höhe der Wandung zur Folge, dass der Oberkörper der Kinder beim Fahren exponiert ist, indem er über den oberen Rand der Wandung ragt.

Aufgabe der Erfindung ist es, den Personen-, Lasten und Tiertransport mit einer Lastentransporteinheit der eingangs genannten Art zu erleichtern, insbesondere in Hinblick auf die Be- und Entladung des Lastaufnahmeraums mit einem oder mehreren Kindern, einem Hund oder mit schweren Laststücken.

Diese Aufgabe wird mit der Erfindung dadurch gelöst, dass mindestens eine der Seitenwände ein im Wesentlichen parallel zu einer Seitenwandlängsrichtung bewegliches Türelement sowie eine von dem Türelement verschließbare und freigebbare Türöffnung umfasst.

Die erfindungsgemäße Lösung hat den Vorteil, dass durch eine Betätigung des Türelements der Zugang zu dem Lastaufnahmeraum von der Seite durch die dann freigegebene Türöffnung eröffnet wird, womit Kinder oder ein Hund oder anderes Haustier selbständig in die Lastentransporteinheit bzw. aus dieser aussteigen können. Schwere Lasten können von der Seite in den Aufnahmeraum eingebracht oder aus diesem herausgenommen werden, ohne dass es erforderlich ist, sie hierfür hoch über die Wandung zu heben. Die die Türöffnung aufweisende Seitenwand, die durch das in Längsrichtung der Seitenwand bewegliche Türelement verschlossen bzw. freigegeben werden kann, befindet sich bevorzugt an einer zum ruhenden Verkehr, also zu einem Fahrbahnrand einer Straße liegenden Seite, in Ländern mit Rechtsverkehr also an der rechten Fahrzeugseite. Es ist natürlich auch möglich, verschließbare Türöffnungen an beiden Seiten - links und rechts - der Lastentransporteinheit vorzusehen, um diese sowohl für den Links- als auch den Rechtsverkehr gleichermaßen geeignet zu machen. Es kann sich in diesem Fall empfehlen, für den Benutzer der Einheit die Möglichkeit zu schaffen, eines der beiden vorhandenen Türelemente gegen Betätigung zu sperren, so dass gewährleistet ist, dass die dem fließenden Verkehr zugewandte Tür nicht beispielsweise von einem mitfahrenden Kind geöffnet werden kann, sondern sich zum Be- und Aussteigen lediglich die Tür auf der sichereren Seite öffnen lässt.

In vorteilhafter Ausgestaltung der Erfindung ist vorgesehen, dass die mindestens eine Seitenwand ein relativ zum beweglichen Türelement nach innen oder nach außen versetzt angeordnetes, feststehendes Seitenwandelement aufweist. Zum Freigeben der Türöffnung kann dann das Türelement seitlich neben das feststehende Seitenwandelement gebracht werden. Besonders vorteilhaft ist es, wenn das Seitenwandelement relativ zum Türelement nach innen versetzt ist und wenn das Türelement eine im Wesentlichen vertikale, insbesondere rückwärtige Stirnseite mit einer Betätigungsfläche zur Fußbedienung des Türelements aufweist. Bei dieser Ausgestaltung befindet sich das Türelement also außen neben dem Seitenwandelement, so dass die eine vertikale, insbesondere rückwärtige Stirnseite des Türelements frei zugänglich ist. Diese Stirnseite, die hierfür mit einem verschleißmindernden Blech o.dgl. versehen sein kann, bildet dann eine Betätigungsfläche, die vom Benutzer des Lastenrads, das mit der Lastentransporteinheit versehen ist, auch mit einem Fuß leicht erreichbar ist, so dass das Türelement durch eine entsprechende Betätigung durch den Fuß in die Schließposition bewegt werden kann. Das Türelement, das in vorteilhafter Ausgestaltung nach Art einer Schiebetür verschieblich gelagert ist, lässt sich also leicht zuschieben, ohne dass der das Fahrrad fahrende Fahrzeugführer sich hierfür nach unten bücken muss, um die Tür von Hand zu erreichen. Natürlich ist eine Fußbetätigung auch möglich, wenn an dem Türelement ein seitlich vor dessen Außenseite vorspringendes Fußpedal oder ein Betätigungsstift vorgesehen ist, das/der mit dem Fuß zum Schließen der Tür in deren Schließposition beaufschlagt werden kann.

Es ist von Vorteil, wenn der Lastaufnahmeraum unterseitig von einem Boden begrenzt wird und wenn die Türöffnung bis zum Niveau des Bodens reicht. Der Lastaufnahmeraum ist somit ohne (nennenswerte) Schwelle für Kinder oder ein Haustier zu betreten bzw. ein schweres Laststück kann direkt über die Kante des Bodens in den Lastaufnahmeraum eingeschoben werden.

Vorzugsweise ist eine an einem Seitenrand oder an einer Unterseite des Bodens und an einem unteren Türrand des Türelements angeschlagene Führungsschieneneinheit vorgesehen, die für einen leichten und zuverlässigen Öffnungs- und Schließvorgang des Türelements sorgt. Hierfür kann die Führungsschieneneinheit eine Teleskopschiene und/oder eine Kugelumlaufschiene aufweisen, wie dies für Schiebetüren, z.B. bei PKWs oder im Möbelbau bekannt ist.

In besonders vorteilhafter Weiterbildung der Erfindung ist vorgesehen, dass das Türelement und/oder die Wandung mit einem vorzugsweise selbst verriegelnden Verriegelungsmechanismus versehen ist/sind. Das Türelement bleibt dann während der Fahrt zuverlässig geschlossen, wenn es in die die Türöffnung verschließende Position gebracht ist. Auf einen besonderen, zusätzlichen Handgriff durch den Fahrer/die Fahrerin zur Verriegelung kann bei der bevorzugt verwendeten Selbstverrieglung verzichtet werden.

Wenn der Verriegelungsmechanismus fernentriegelbar ist, ist es möglich, dass der Fahrer/die Fahrerin das Türelement zur Öffnung durch ein mitfahrendes Kind freigibt, ohne hierfür vom Fahrzeug absteigen zu müssen. Der Verriegelungsmechanismus kann in vorteilhafter Weise elektromechanisch betätigbar und dann zweckmäßig mit einer Stromversorgung des Fahrzeugs verbunden sein. Die Entriegelung kann somit z.B. elektrisch mittels eines vom Lenker betätigbaren Schalters erfolgen, oder auch von einem elektronischen Endgerät aus, das mit dem Lastenrad bzw. dem Verriegelungsmechanismus der Lastentransporteinheit vorzugsweise über eine kabellose Schnittstelle gekoppelt ist.

Zur sicheren Führung des Türelements beim Öffnungs- und Schließvorgang ist vorzugsweise ein das Türelement an dessen oberen Rand und das feststehende Seitenwandelement relativ zueinander verschieblich führendes Führungselement vorgesehen. Dabei kann es sich beispielsweise um ein Element wie beispielsweise einen einfachen Haltewinkel handeln, das den oberen Rand des Türelements oder des feststehenden Seitenwandelements übergreift oder das mit einer am jeweils benachbarten Element angeordneten Führungsschiene zusammenwirkt.

Wenn die Lastenaufnahmeeinheit in ihrem besonders bevorzugten Anwendungsbereich zum Kindertransport vorgesehen ist, ist im Lastaufnahmeraum zweckmäßig ein Kindersitz angeordnet oder montierbar, der Platz für ein oder mehrere Kinder bietet. Es versteht sich, dass der Kindersitz dann mit den üblichen Sicherheitseinrichtungen wie Anschnallgurten und d.gl. versehen ist. Wenn der Kindersitz seitlich neben dem feststehenden Seitenwandelement positioniert ist, bietet die Seitenwand seitlich Halt und Schutz für das/die Kind(er). Vorzugsweise kann im Bereich vor und/oder oberhalb des Kindersitzes mindestens ein Überrollbügel angeordnet sein, womit die Sicherheit des Kindes/der Kinder beim Transport weiter verbessert ist.

Es ist möglich, die Lastentransporteinheit als nachträglich an einem kompatiblen Fahrzeug montierbares und von diesem demontierbares Cargomodul auszugestalten, so dass bestehende Fahrzeuge damit nachgerüstet werden können.

Mit der Erfindung wird ein Lastentransportfahrzeug, insbesondere ein Lastentransportrad geschaffen, das in vorteilhafter Weise mit einer erfindungsgemäßen Lastentransporteinheit ausgestattet ist oder werden kann. Das Lastentransportrad nach der Erfindung ist vorzugsweise dadurch gekennzeichnet, dass die Lastentransporteinheit vor einer Lenkereinrichtung des Lastentransportrads positioniert oder positionierbar ist, womit der Fahrzeugführer die mit der Lastentransporteinheit transportierten Insassen wie Kinder oder einen Hund gut im Blick behalten kann. Der Verriegelungsmechanismus kann dann von dem Fahrzeugführer des Lastentransportrads fernentriegelt werden, nachdem sich dieser davon überzeugt hat, dass für das transportierte Kind oder Tier keine Gefahr durch den umgebenden Verkehr besteht, wenn die Tür geöffnet wird. Die Fernentriegelung kann elektromechanisch und hierzu z.B. über ein elektronisches Steuerkabel, per Funk oder kabellos, aber auch rein mechanisch beispielsweise über einen Seilzug, der beispielsweise vom Lenker aus über einen dort angebrachten Seilzughebel bedienbar ist, erfolgen.

Eine besonders vorteilhafte Ausgestaltung ergibt sich bei einem mit einem Hilfsantrieb mit einer Antriebssteuerung ausgestatteten Lastentransportrad, wenn der Verriegelungsmechanismus mit einem den Verriegelungszustand feststellenden, an die Antriebssteuerung angeschlossenen Sensor/Schalter versehen ist, um den Hilfsantrieb nur bei festgestellter Verriegelung des Türelements freizugeben. Auf diese Weise nämlich erhält der Fahrzeugführer automatisch eine Rückmeldung über die ordnungsgemäße Verriegelung des Türelements und damit den Verschluss der Türöffnung, denn die Tretunterstützung durch den Hilfsantrieb erfolgt nur dann, wenn die Tür zuverlässig und sicher geschlossen ist und dieser Zustand von dem Sensor/Schalter festgestellt und an die Antriebssteuerung gemeldet wird.

Vorzugsweise ist die Anordnung so getroffen, dass das Türelement entgegen einer Fahrtrichtung des Lastentransportrads zur Freigabe der Türöffnung und in der Fahrtrichtung zum Verschließen der Türöffnung verschiebbar ist. Beim Öffnen bewegt sich das Türelement somit in Richtung auf den hinter der Lastentransporteinheit sitzenden Fahrerführer, wobei die rückwärtige, im Wesentlichen vertikal verlaufende Stirnseite in den Wirkungsbereich vor den Fuß des Fahrzeugführers gelangt, so dass die Schiebetür durch eine entsprechende Fußbewegung wieder nach vorne in Schließrichtung bewegt und hierdurch in die verriegelte Stellung gebracht werden kann.

Weiter Merkmale und Vorteile der Erfindung ergeben sich aus der nachfolgenden Beschreibung und der Zeichnung, worin eine bevorzugte Ausführungsform der Erfindung an einem Beispiel näher dargestellt wird. Es zeigt:
- **Fig.l**: ein erfindungsgemäßes Lastentransportrad mit einer Lastentransporteinheit nach der Erfindung, in einer leicht vereinfachten Seitenansicht;

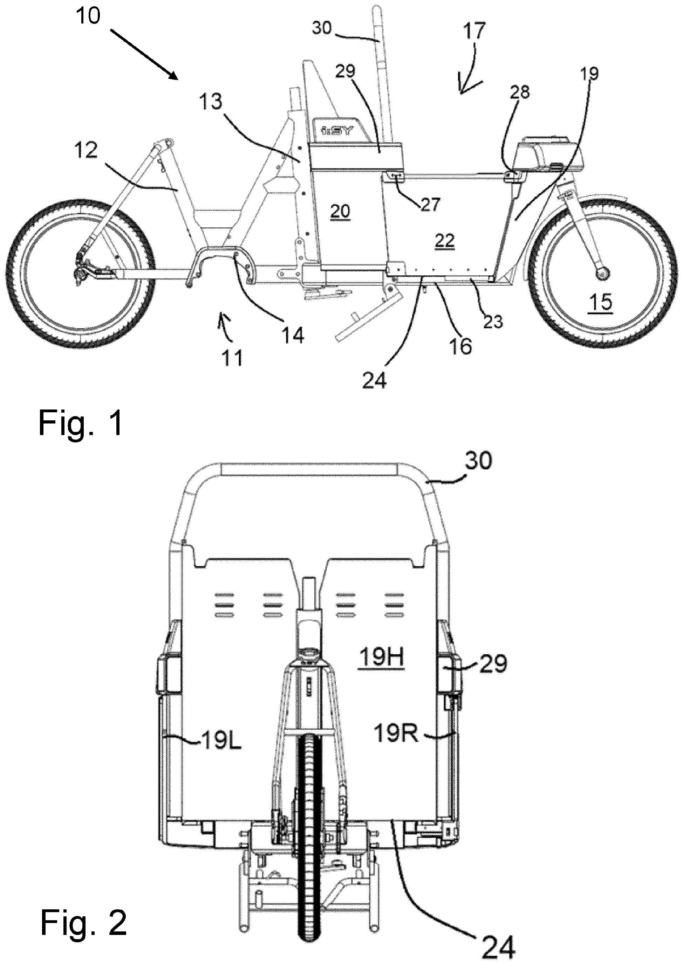

- **Fig.2**: den Gegenstand der Fig.1 in einer Ansicht von hinten;
- **Fig.3**: den Gegenstand der Fig. 1 und 2 in einer perspektivischen Darstellung mit geschlossenem Türelement;
- **Fig.4**: das Lastentransportrad mit Lastentransporteinheit bei geöffnetem Türelement, in einer Fig.3 entsprechenden Darstellung;
- **Fig.5A**: eine Detaildarstellungen der Führung des beweglichen Türelements am feststehenden Türelement in perspektivischer Ansicht; und
- **Fig.5b**: eine Detaildarstellungen der Führung des beweglichen Türelements am feststehenden Türelement in perspektivischer Ansicht Schnittansicht.

Die Zeichnung zeigt ein in seiner Gesamtheit mit 10 bezeichnetes Lastentransportrad, bei dem zur Vereinfachung der Darstellung verschiedene Komponenten, die für die vorliegende Erfindung von untergeordneter Bedeutung sind, nicht mit dargestellt sind, wie beispielsweise Sattel, elektrischer Hilfsantrieb und Antriebskette oder Lenkeinrichtung.

In an sich bekannter Weise hat das Lastentransportrad 10 einen Rohrrahmen 11 mit einem Sattelrohr 12 und einem gegenüber diesen nach vorne versetzten Steuerrohr 13 sowie einer am unteren Ende des Sattelrohrs ausgebildeten Motoraufnahme 14 für einen (nicht dargestellten) elektrischen Hilfsmotorantrieb mit dem Tretlager. Der Fahrzeugführer sitzt auf dem am Sattelrohr montierten (nicht dargestellten) Fahrradsattel und steuert das Lastenfahrrad mittels einer am Steuerrohr 13 gelagerten Steuereinrichtung (ebenfalls nicht dargestellt), wobei die Lenkbewegung über ein Lenkgestänge auf das Vorderrad 15 übertragen wird.

Im Bereich vor dem Steuerrohr 13 und hinter dem Vorderrad 15 ist das Lastentransportrad 10 mit einer stabilen, aus mehreren Rohren bestehenden Gepäckbrücke 16 versehen, auf der eine Lastentransporteinheit 17 montiert ist, die als vom Fahrrad demontierbares Cargomodul ausgestaltet ist und die im Zentrum der vorliegenden Erfindung steht.

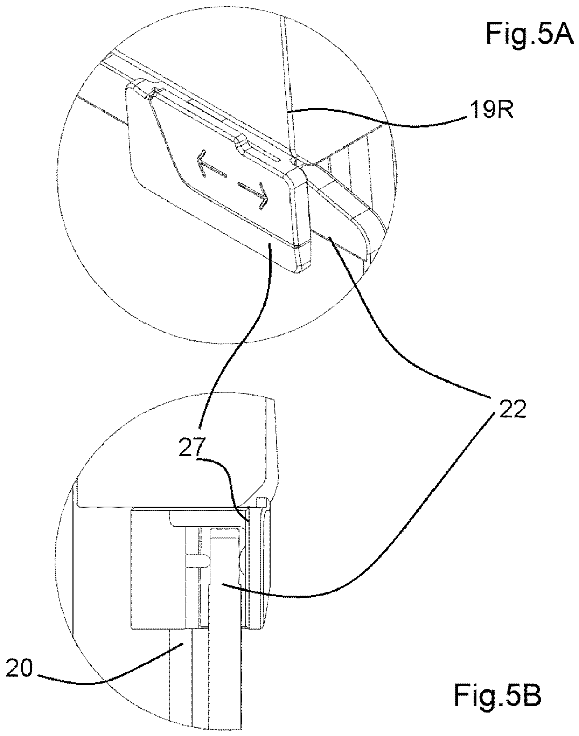

Man erkennt, dass die Lastentransporteinheit 17 einen Lastaufnahmeraum 18 bildet, der umfangsseitig von einer Wandung 19 begrenzt wird, die im Wesentlichen eine Vorderwand 19V, eine Rückwand 19H sowie eine rechtzeitige Seitenwand 19R und eine linksseitige Seitenwand 19L umfasst. Die beiden Seitenwände 19R und 19L haben jeweils ein hinteres, an die Rückwand 19H angrenzendes und sich von dieser nach vorne erstrecken des, feststehendes Seitenwandelement 20 sowie eine davor liegende, sich bis zur Vorderwand 19V erstreckende Türöffnung 21, die mittels eines parallel zur Längsrichtung der jeweiligen Seitenwand 19R,19 L beweglichen Türelements 22 verschließbar und freigebbar ist. Die Anordnung ist so getroffen, dass das bewegliche Türelement 22 relativ zu dem jeweils zugehörigen Seitenwandelement 20 nach außen versetzt angeordnet ist, so dass das Türelement 22 nach Art einer Schiebetür außen vor dem feststehenden Seitenwandelement 20 entlang beweglich ist. Für die Beweglichkeit sorgt eine Führungsschieneneinheit 23, die einerseits an einer Unterseite 24 eines Bodens 25 des Lastaufnahmeraums 18 und andererseits am unteren Rand 26 des jeweiligen Türelements 22 angeschlagen ist. Die Führungsschieneneinheit 23 ist bei dem Ausführungsbeispiel als Teleskopschiene mit einer Kugelumlauflagerung ausgeführt, womit eine besonders leichtgängige Bewegung des Türelements möglich wird. Unterstützt wird die Längsführung des Türelements 22 durch ein am zugeordneten Seitenwandelement 20 oben nahe der vorderen Längskante angeordnetes Führungselement 27, das den oberen Rand des beweglichen Türelements 22 übergreift und dabei mittels eines Gleitelements oder ebenfalls kugelgelagert führt, wie dies in der Detaildarstellung in Fig. 5B erkennbar ist.

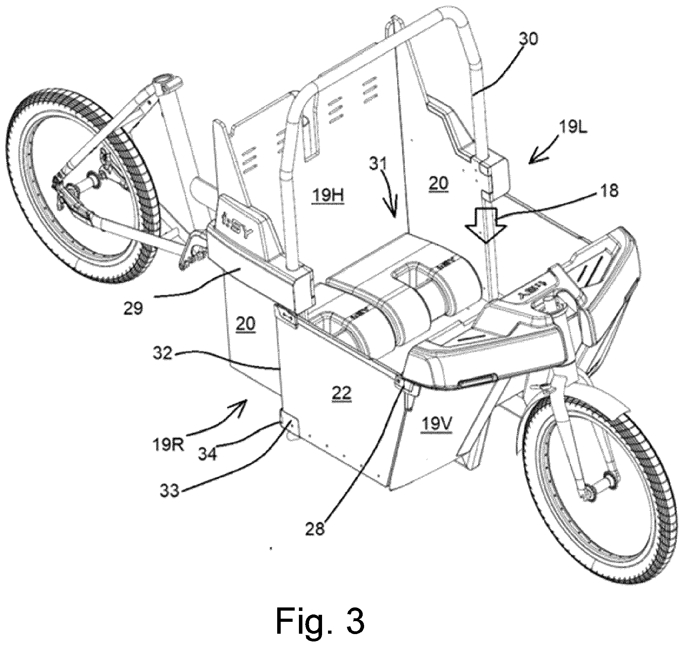

An der Vorderwand 19V ist an deren oberen Eckbereich ein Verriegelungsmechanismus 28 für das Türelement 22 vorgesehen, der in nicht näher gezeigter Weise für eine automatische Verriegelung des Türelements in seiner die Türöffnung 21 verschließenden, in Fig. 3 gezeigten Stellung sorgt. Der Verriegelungsmechanismus 28 ist bei der bevorzugten Ausführungsform der Erfindung elektromechanisch fernentriegelbar und hierzu über eine Kabelverbindung oder eine kabellose Schnittstelle mit einem am Lenker des Fahrrads angeordneten Freigabeschalter oder mit einer Applikation auf einem mobilen Endgerät (nicht dargestellt) verbunden, womit der Fahrzeugführer die Verriegelung aufheben und damit die Tür zum Öffnen freigeben kann. Es ist möglich, die Öffnung durch eine Feder oder ein Druckgaselement zu unterstützen oder einen elektrischen Servomotor o.dgl. vorzusehen, der die Öffnung und gegebenenfalls auch das Schließen bewirkt. Vorzugsweise ist der Verriegelungsmechanismus mit einem am Lastenfahrrad angeordneten Geschwindigkeitssensor gekoppelt und so programmiert, dass die Verriegelung nur dann aufgehoben werden kann, wenn sich das Lastenfahrrad im Stillstand befindet.

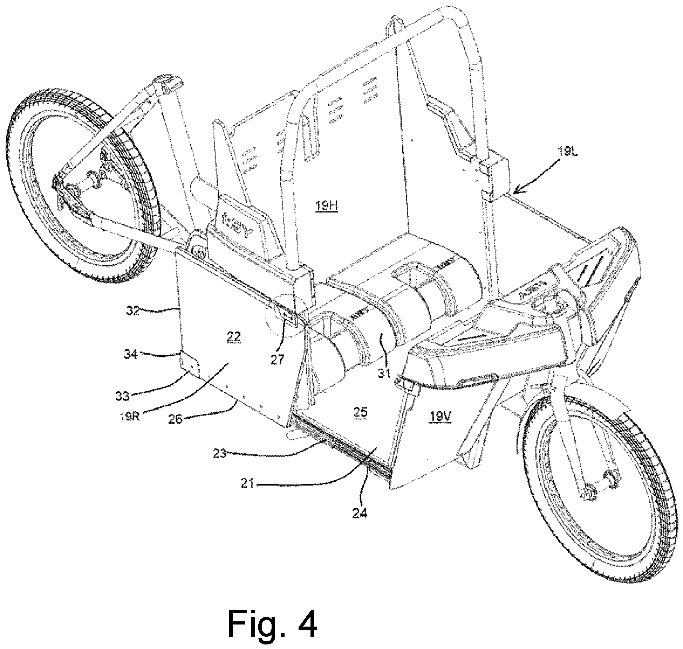

Wie man am besten in Fig. 4 erkennen kann, erstreckt sich die Türöffnung 21 in der Höhe nach unten bis zum Niveau des Bodens 25 des Lastaufnahmeraums 18, so dass dieser bei geöffnetem Türelement 22 ohne eine Schwelle am Boden betreten oder verlassen werden kann. Die Seitenwandelemente 20 sind gegenüber dem jeweiligen beweglichen Türelement 22 höher ausgeführt und weisen jeweils eine nach außen vorspringende, Stöße abfedernde Verkleidung 29 auf, hinter der Befestigungselemente für einen Überrollbügel 30 versteckt aufgenommen sind. Der Überrollbügel 30 verbindet die beiden Seitenwandelemente miteinander und steift die Seitenwände gegeneinander aus. Zwischen den Seitenwandelementen ist im Lastaufnahmeraum 18 ein Kindersitz 31 mit Sitzplätzen für zwei Kinder so montiert, dass die Rückwand 19R zugleich als Rückenlehne für die auf dem Kindersitz sitzenden, jungen Fahrgäste dient. Die kastenförmigen Verkleidungen 29 springen nach außen ein Stück weit vor, so dass das zugehörige Türelement 22 in seiner offenen Stellung unterhalb der Verkleidung 29 positioniert ist.

Insbesondere in den Fig. 3 und 4 kann man weiter gut erkennen, dass das Türelement 22 eine im Wesentlichen vertikale, rückwärtige Stirnseite 32 hat, die an ihrem unteren Bereich mittels einer Blechverkleidung 33 verstärkt ist. Die Stirnseite mit ihrer Blechverkleidung bildet eine Betätigungsfläche 34 zur Fußbedienung des Türelements 22, indem der Fahrzeugführer das geöffnete Türelement 22 insbesondere mit der Fußspitze nach vorne in die geschlossene Position der Schiebetür verschieben kann, in der dann der Verriegelungsmechanismus 28 wirksam wird und die Tür in der geschlossenen Stellung so lange sicher hält, bis durch den Fahrzeugführer die Verriegelung wieder aufgehoben wird. Eine Entriegelung durch einen der mitfahrenden, kleinen Passagiere während der Fahrt ist ausgeschlossen, da die Entriegelung regelmäßig nur durch den Fahrzeugführer erfolgen kann. Der Verriegelungsmechanismus 28 kann zusätzlich auch mit einem (nicht dargestellten) Sensor oder Schalter versehen sein, mit dem der Schließzustand des Türelements 22 überwacht wird und der an die Antriebssteuerung für den elektrischen Hilfsantrieb so angeschlossen ist, dass diese den Elektromotor nur dann zur Abgabe von Leistung freigibt, wenn die Verriegelung des Türelements ordnungsgemäß erfolgt ist. Auf diese Weise kann sichergestellt werden, dass der Fahrzeugführer des Lastenfahrrads es beim Anfahren unverzüglich merkt, ob das Türelement ordnungsgemäß verriegelt ist, da die zum Anfahren besonders erwünschte zusätzliche Leistung des Hilfsmotors nur dann zur Verfügung steht.

Die Erfindung ist nicht auf das dargestellte und beschriebene Ausführungsbeispiel beschränkt, vielmehr sind eine Reihe von Änderungen und Ergänzungen möglich, ohne den Rahmen der Erfindung zu verlassen. Während das Ausführungsbeispiel Schiebetürenelemente sowohl auf der linken als auch der rechten Fahrzeugseite vorsieht, kann die Erfindung grundsätzlich natürlich auch mit lediglich einem in Seitenwandlängsrichtung beweglichen Türelement realisiert werden, wobei sich dann bevorzugt die Türöffnung an der Seite des Fahrzeugs befindet, an der Kinder den Lastaufnahmeraum mit geringerer Gefährdung betreten und verlassen können, also bei regelmäßigem Gebrauch des Lastenfahrrads in Ländern mit Rechtsverkehr entsprechend auf der rechten Fahrzeugseite. Der Kindersitz im Lastaufnahmeraum kann zur Erreichung einer größtmöglichen Variabilität demontierbar sein, so dass nach dem Ausbau des Kindersitzes eine größtmögliche Transportfläche, beispielsweise für mehrere Getränkekästen, sperrige Baumaterialien, oder dergleichen zur Verfügung steht. Die gesamte Lastentransporteinheit kann als Modul vom Lastentransportrad abgebaut und bei Bedarf auch an einem angepassten Lastentransportanhänger montiert werden. Das Öffnen und Schließen des Türelements kann auch durch einen elektrischen Antrieb, beispielsweise einen elektrischen Servomotor erfolgen, der von der Fahrbatterie des elektrischen Hilfsantriebs mitversorgt wird. Der Verriegelungsmechanismus kann auch im unteren Bereich des beweglichen Seitenwandelements angeordnet sein und beispielsweise in die Führungsschiene integriert oder an der Bodenplatte oder der Frontwand angebracht sein.

## Patentansprüche

1. Lastentransporteinheit, insbesondere für ein Lastentransportrad oder einen an einem Fahrrad ankuppelbaren Lastentransportanhänger, mit einer einen Lastaufnahmeraum (18) umfangsseitig begrenzenden Wandung (19), die im Wesentlichen rechts- und linksseitige Seitenwände (19R, 19L), eine Vorderwand (19V) und/oder eine Rückwand (19R) aufweist, **dadurch gekennzeichnet, dass** mindestens eine der Seitenwände (19R, 19L) ein im Wesentlichen parallel zu einer Seitenwandlängsrichtung bewegliches Türelement (22) sowie eine von dem Türelement verschließbare und freigebbare Türöffnung (21) umfasst.

2. Lastentransporteinheit nach Anspruch 1, **dadurch gekennzeichnet, dass** die mindestens eine Seitenwand (19R, 19L) ein relativ zum beweglichen Türelement (22) nach innen oder nach außen versetzt angeordnetes, feststehendes Seitenwandelement (20) aufweist.

3. Lastentransporteinheit nach Anspruch 2, **dadurch gekennzeichnet, dass** das Seitenwandelement (20) relativ zum Türelement (22) nach innen versetzt ist und dass das Türelement (22) eine im Wesentlichen vertikale, insbesondere rückwärtige Stirnseite (32) mit einer Betätigungsfläche (34) zur Fußbedienung des Türelements (22) aufweist.

4. Lastentransporteinheit nach einem der Ansprüche 1 bis 3, **dadurch gekennzeichnet, dass** das Türelement (22) nach Art einer Schiebetür verschieblich gelagert ist.

5. Lastentransporteinheit nach einem der Ansprüche 1 bis 4, **dadurch gekennzeichnet, dass** der Lastaufnahmeraum (18) unterseitig von einem Boden (25) begrenzt wird und dass die Türöffnung (21) bis zum Niveau des Bodens (25) reicht.

6. Lastentransporteinheit nach Anspruch 5, **gekennzeichnet durch** eine an einem Seitenrand oder an einer Unterseite (24) des Bodens (25) und an einem unteren Türrand (26) des Türelements (22) angeschlagenen Führungsschieneneinheit (23), wobei vorzugsweise die Führungsschieneneinheit (23) eine Teleskopschiene und/oder eine Kugelumlaufschiene aufweist.

7. Lastentransporteinheit nach einem der Ansprüche 1 bis 6, **dadurch gekennzeichnet, dass** das Türelement (22) und/oder die die Wandung (19) mit einem vorzugsweise selbst verriegelten Verriegelungsmechanismus (28) versehen ist, wobei vorzugsweise der Verriegelungsmechanismus (28) fernentriegelbar ist.

8. Lastentransporteinheit nach einem der Ansprüche 1 bis 7, **gekennzeichnet durch** ein das Türelement (22) an dessen oberen Rand und das feststehende Seitenwandelement (20) relativ zueinander verschieblich führendes Führungselement (27), wobei vorzugsweise das Führungselement (27) den oberen Rand des Türelements (22) oder des feststehenden Seitenwandelements übergreift oder mit einer am jeweils benachbarten Element angeordneten Führungsschiene zusammenwirkt.

9. Lastentransporteinheit nach einem der Ansprüche 1 bis 8, **gekennzeichnet durch** wenigstens einen im Lastaufnahmeraum (18) angeordneten oder montierbaren Kindersitz (31), wobei vorzugsweise der Kindersitz (31) oder die Kindersitze seitlich neben dem feststehenden Seitenwandelement (20) und/oder zwischen feststehenden Seitenwandelementen (20) der Seitenwände (19R; 19L) positioniert ist/sind.

10. Lastentransporteinheit nach einem der Ansprüche 1 bis 9, **dadurch gekennzeichnet, dass** die Lastentransporteinheit als nachträglich an einem kompatiblen Fahrzeug montierbares und von diesem demontierbares Cargomodul ausgestaltet ist.

11. Lastentransportrad mit einer Lastentransporteinheit nach einem der Ansprüche 1 bis 10.

12. Lastentransportrad nach Anspruch 11, **dadurch gekennzeichnet, dass** die Lastentransporteinheit (17) vor einer Lenkereinrichtung (13) des Lastentransportrads (10) positioniert oder positionierbar ist.

13. Lastentransportrad nach Anspruch 11 oder 12, **dadurch gekennzeichnet, dass** der Verriegelungsmechanismus (28) von einem Fahrzeugführer des Lastentransportrads (10) fernentriegelbar ist.

14. Lastentransportrad nach einem der Ansprüche 11 bis 13, **dadurch gekennzeichnet, dass** es mit einem Hilfsantrieb mit einer Antriebssteuerung ausgestattet ist, und dass der Verriegelungsmechanismus (28) mit einem den Verriegelungszustand feststellenden, an die Antriebssteuerung angeschlossenen Sensor oder Schalter versehen ist, um den Hilfsantrieb nur bei festgestellter Verriegelung des Türelements freizugeben.

15. Lastentransportrad nach einem der Ansprüche 11 bis 14, **dadurch gekennzeichnet, dass** das Türelement (22) entgegen einer Fahrtrichtung des Lastentransportrads (10) zur Freigabe der Türöffnung (21) und in der Fahrtrichtung zum Verschließen der Türöffnung (21) verschiebbar ist.
